(19) Europäisches Patentamt / European Patent Office / Office européen des brevets

(11) **EP 2 668 100 B1**

(12) **FASCICULE DE BREVET EUROPEEN**

(45) Date de publication et mention de la délivrance du brevet:
**06.07.2016 Bulletin 2016/27**

(21) Numéro de dépôt: **12705347.8**

(22) Date de dépôt: **20.01.2012**

(51) Int Cl.:
*G05D 1/10* (2006.01)   *B64G 1/00* (2006.01)
*B64G 1/38* (2006.01)   *B64G 1/26* (2006.01)

(86) Numéro de dépôt international:
**PCT/FR2012/050125**

(87) Numéro de publication internationale:
**WO 2012/101363 (02.08.2012 Gazette 2012/31)**

(54) **PROCÉDÉ ET SYSTÈME DE PILOTAGE D'UN ENGIN VOLANT À PROPULSEUR ARRIÈRE**

VERFAHREN UND SYSTEM ZUR STEUERUNG EINER FLUGMASCHINE MIT EINER HINTERANTRIEBSEINHEIT

METHOD AND SYSTEM FOR PILOTING A FLYING CRAFT WITH REAR PROPULSION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.01.2011 FR 1100230**

(43) Date de publication de la demande:
**04.12.2013 Bulletin 2013/49**

(73) Titulaire: **Airbus Defence and Space SAS**
**78130 Les Mureaux (FR)**

(72) Inventeurs:
• **CAYE, Paul**
**F-95800 Courdimanche (FR)**
• **CAILLAUD, James**
**F-78600 Maisons Lafitte (FR)**
• **LAPORTE, Guillaume**
**F-78510 Triel Sur Seine (FR)**

(74) Mandataire: **Gevers & Orès**
**41 avenue de Friedland**
**75008 Paris (FR)**

(56) Documents cités:
**EP-A1- 0 352 161      GB-A- 2 092 336**
**US-A- 5 806 804       US-A1- 2005 072 876**
**US-B1- 6 347 262**

**EP 2 668 100 B1**

## Description

La présente invention concerne un procédé et un système pour le pilotage d'un engin volant à propulseur arrière.

On sait qu'un engin volant, tel qu'un lanceur spatial, peut être piloté par au moins un propulseur orientable monté à l'extrémité arrière de l'engin. Ce propulseur est agencé pour appliquer à l'engin une poussée dont l'intensité et l'orientation déterminent la trajectoire de vol de l'engin.

Un tel engin volant est connu de EP 0 352 161, qui est considéré comme l'art antérieur le plus proche et décrit les caractéristiques du préambule de la revendication 4.

On sait de plus que dans de tels engins volants est généralement disposée, dans la partie avant, une centrale inertielle dont une fonction est de mesurer l'attitude de l'engin, c'est-à-dire son orientation par rapport à des axes inertiels (de référence) intégrés à la centrale inertielle. Un calculateur en déduit notamment l'orientation à conférer au propulseur arrière pour que la poussée qu'il applique permette de guider et de stabiliser l'engin sur une trajectoire de vol. Cette orientation est appliquée au propulseur arrière par l'intermédiaire d'une boucle d'asservissement, dont la loi de commande définit, de manière classique, la relation entre l'orientation de la poussée que le propulseur doit appliquer à l'engin et l'attitude dudit engin mesurée au niveau de la centrale inertielle.

L'engin volant ainsi équipé est apte à être piloté en vol, en temps réel, de sorte que sa trajectoire peut être contrôlée et stabilisée quelles que soient les conditions de vol (atmosphérique, orbitale, etc.).

Toutefois, la structure de ce type d'engin présente généralement une rigidité qui n'est pas infinie, de sorte qu'elle est susceptible de subir des déformations élastiques oscillatoires. Ces déformations perturbent la loi de commande régissant la boucle d'asservissement de l'engin, d'une part, suivant des modes avec des fréquences et des amortissements différents. Or, la perturbation de la loi de commande peut engendrer une déstabilisation de l'engin.

Pour stabiliser cet engin vis-à-vis de tels modes de déformation, il est connu de filtrer la commande d'orientation du propulseur, qui est déterminée par un calculateur en fonction de la mesure antérieure d'attitude de l'engin, fournie par la centrale inertielle, de sorte que soient atténués lesdits modes.

De façon équivalente, il est connu de filtrer la commande d'orientation du propulseur, déterminée par le calculateur, en vue de faire s'opposer, d'une part, ladite orientation du propulseur et, d'autre part, la déformation engendrée par un mode à une fréquence donnée.

Cependant, ces techniques antérieures de filtrage ne peuvent pas être appliquées lorsque les fréquences des modes de déformation sont du même ordre de grandeur que la bande passante visée pour le pilotage (par exemple la bande passante nécessaire pour la stabilité de l'engin). En particulier, lorsque la déformation de l'engin présente une fréquence de premier mode située dans la bande passante nécessaire à la stabilité, ledit engin est susceptible de ne pas être pilotable, puisque contraint de satisfaire simultanément, d'une part, les exigences du contrôle du mouvement d'ensemble de l'engin (mode dit « rigide ») et, d'autre part, les exigences de stabilité des modes de déformation (engin volant non parfaitement rigide, déformation élastique).

L'objet de la présente invention est donc un procédé de pilotage selon la revendication 1, d'un engin volant, par des moyens propulseurs orientables par rapport à l'extrémité arrière de l'engin, qui permet de guider et de stabiliser l'engin quelles que soient les conditions de vol, y compris lorsque l'engin est soumis à des contraintes susceptibles de déformer élastiquement, de façon oscillatoire, la structure dudit engin selon différents modes.

A cette fin, selon l'invention, le procédé de pilotage d'un engin volant, par des moyens propulseurs orientables par rapport à l'extrémité arrière de l'engin, procédé selon lequel, suivant une boucle d'asservissement, on mesure l'attitude de l'engin et on ajuste l'orientation des moyens propulseurs en fonction de la mesure d'attitude, de manière à stabiliser l'engin sur sa trajectoire de vol, est remarquable par le fait que l'attitude de l'engin est mesurée au voisinage de l'extrémité arrière dudit engin.

Ainsi, grâce à l'invention, la commande des moyens propulseurs et la mesure de l'attitude de l'engin sont réalisées en des points situés dans un même voisinage. Il en résulte que l'attitude ainsi mesurée correspond au moins sensiblement à l'attitude qu'il importe de conférer à l'engin et peut ainsi être directement utilisée pour commander les moyens propulseurs, sans qu'il soit nécessaire de procéder à une adaptation de l'attitude mesurée entre la partie avant et l'extrémité arrière de l'engin, susceptible de perturber la loi de commande de l'engin.

Ainsi, par le positionnement judicieux des moyens de mesure d'attitude, la perturbation (engendrée par les modes de déformation) de la loi de commande de l'engin est contrôlée de façon plus performante.

En outre, on notera que l'invention permet notamment de lever un degré de liberté quant à la stabilisation de l'engin et autorise une latitude sur son niveau de rigidité. Ainsi, les contraintes de conception - et plus particulièrement les contraintes de raideur - de l'engin peuvent être relâchées, pour une fabrication de l'engin d'autant simplifiée.

Si, selon l'invention, l'attitude de l'engin peut être mesurée au niveau de l'extrémité arrière de l'engin, on comprendra qu'il est d'autant mieux tenu compte de la déformation élastique de la structure de l'engin que la mesure s'effectue au plus près du point autour duquel s'articulent les moyens propulseurs.

Aux fins d'une meilleure stabilisation de l'engin, lors de l'ajustement de l'orientation des moyens propulseurs, il est tenu compte des déformées angulaires et linéaires à l'extrémité arrière dudit engin et à l'endroit de la mesure d'attitude.

Dans ce cas, afin que le contrôle des modes de déformation s'opère de façon naturelle, l'endroit de la mesure d'attitude est déterminé de manière que, quelle que soit la déformation dudit engin, la déformée angulaire à l'endroit de ladite mesure et la déformée linéaire à l'extrémité arrière dudit engin sont de signes opposés.

En variante, lorsque, pour une déformation donnée de l'engin, la déformée angulaire à l'endroit de la mesure d'attitude et la déformée linéaire à l'extrémité arrière dudit engin sont de même signe, on ajuste l'orientation des moyens propulseurs en tenant compte dudit signe.

De préférence, la mesure d'attitude et l'ajustement de l'orientation des moyens propulseurs sont réalisés successivement dans un intervalle de temps très court. Ainsi, on s'assure que, dans l'intervalle de temps entre la mesure d'attitude et l'ajustement de l'orientation des moyens propulseurs, la déformée angulaire à l'endroit de ladite mesure et la déformée linéaire à l'extrémité arrière de l'engin n'ont pas changé de signes.

L'invention concerne également un engin selon la revendication 4, comprenant des moyens propulseurs orientables par rapport à l'extrémité arrière de l'engin, des moyens de mesure de l'attitude dudit engin, ainsi que des moyens d'ajustement de l'orientation desdits moyens propulseurs en fonction de ladite mesure d'attitude, de manière à guider ledit engin suivant une trajectoire stable, ce système étant remarquable par le fait que lesdits moyens de mesure de l'attitude de l'engin volant sont situés au voisinage de l'extrémité arrière dudit engin.

Les figures du dessin annexé feront bien comprendre comment l'invention peut être réalisée. Sur ces figures, des références identiques désignent des éléments semblables.

La figure 1 est un schéma représentant un système connu pour le pilotage d'un engin, dans un plan poussée - fibre neutre de l'engin.

La figure 2 illustre le système de pilotage connu de la figure 1 dans le cas où ledit engin subit des déformations élastiques oscillatoires (amplifiées de façon exagérée sur la figure 2).

La figure 3 est un schéma représentant le système de pilotage conforme à la présente invention, dans une situation comparable à celle de la figure 2.

La figure 4 montre, en vue semblable à la figure 3, une variante du système de pilotage conforme à l'invention.

La figure 5 illustre les modes de déformation de l'engin.

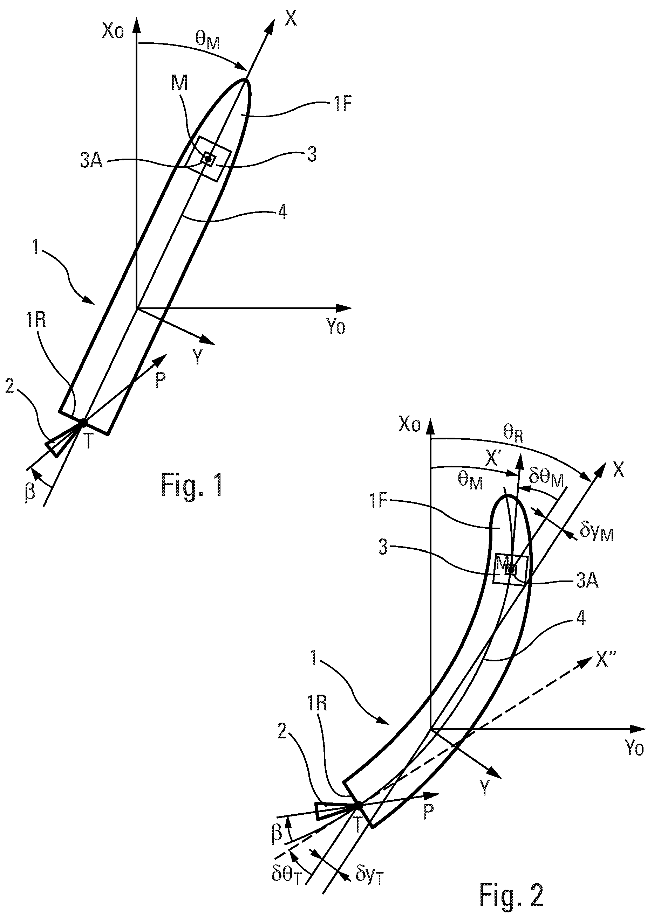

L'engin volant 1 de type connu - par exemple un lanceur spatial - illustré sur la figure 1 est pourvu de moyens propulseurs 2 aptes à orienter une poussée P à l'extrémité arrière 1R dudit engin. Ces moyens propulseurs 2 sont orientables et articulés autour d'un point d'articulation T situé à ladite extrémité 1R de l'engin, de façon que ladite poussée P puisse être orientée autour dudit point d'articulation T. Sur la figure 1, l'orientation de la poussée par rapport à l'axe longitudinal X dudit engin 1 est représentée par l'angle $\beta$. Le guidage de l'engin 1 le long d'une trajectoire (non représentée) est obtenu de façon connue par le réglage de l'angle $\beta$ par rapport à des axes inertiels $X_0$ et Yo.

Le rôle du contrôle de la trajectoire de l'engin 1 est alors d'amener l'axe longitudinal X dudit engin 1 dans la direction désirée, par rapport aux axes inertiels $X_0$ et Yo, en agissant sur la commande de l'angle $\beta$.

Afin de commander la poussée en fonction de la trajectoire de vol souhaitée, il importe de déterminer en temps réel la position et l'attitude de l'engin 1. A cette fin, l'engin 1 est muni de façon connue d'une centrale inertielle 3 située au point M, dans la partie avant 1 F de l'engin. Cette centrale 3 enregistre, au départ de l'engin, les axes inertiels $X_0$ et Yo, qui servent de référentiels à ladite centrale 3. Par la suite, lorsque l'engin 1 se déplace, la centrale 3 mesure, par l'intermédiaire d'un moyen de mesure 3A, l'attitude $\theta_M$ dudit engin (déterminée par les axes X et Y de l'engin au niveau de la centrale 3) par rapport aux axes inertiels $X_0$ et Yo, puis un calculateur en déduit le braquage des moyens de poussée 2 (qui déterminent l'orientation $\beta$ de la poussée appliquée à l'engin) de manière que l'engin suive la trajectoire de vol souhaitée, cette trajectoire devant notamment être stable.

Sur la figure 1, on a supposé que l'engin 1 présente une rigidité infinie de sorte que sa fibre neutre 4 est confondue avec l'axe longitudinal X. La loi de commande générale qui s'applique aux moyens propulseurs 2 s'écrit alors classiquement ($\theta$ étant l'écart entre l'attitude mesurée $\theta_M$ et l'attitude visée $\theta_R$) :

$$\beta = \lambda_\theta \theta + \lambda_{\dot{\theta}} \dot{\theta} + \lambda_{\int \theta} \int \theta \qquad \text{(Equation 1)}$$

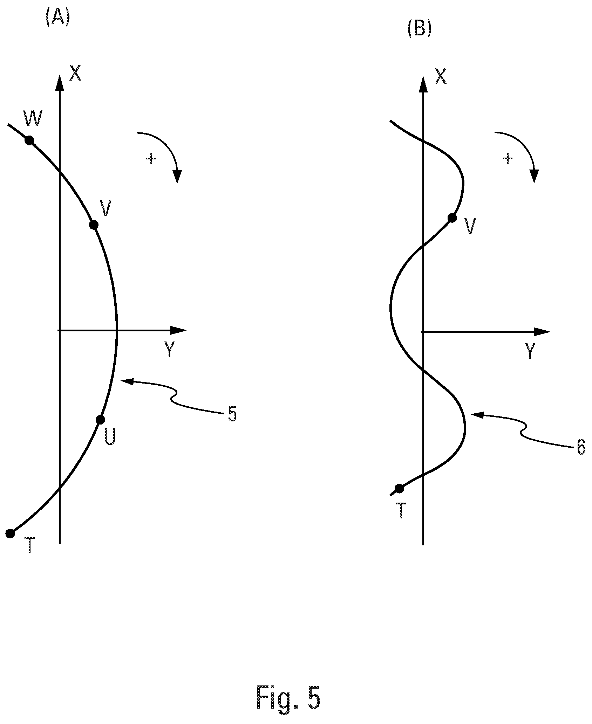

Cependant, comme représenté avec exagération sur la figure 2, la structure de l'engin 1 n'est pas infiniment rigide et est donc susceptible de se déformer élastiquement sous l'effet de contraintes oscillatoires. Ces déformations présentent des modes de différentes fréquences, dont deux sont représentés sur la figure 5 (le mode d'ordre 1 sur le schéma A et un mode d'ordre supérieur sur le schéma B). Sur la figure 2, l'engin 1 (et sa fibre neutre 4) présente une incurvation régulière, si bien que ce mode d'ordre un est le principal mode de la déformation.

La mesure effectuée par le moyen de mesure 3A de la centrale inertielle 3 permet de déduire l'attitude $\theta_M$ de

l'engin à cet endroit, cette attitude $\theta_M$ correspondant à l'écart angulaire entre l'axe X' de l'engin (axe apparent dudit engin au point M de la mesure) et l'axe inertiel $X_0$. A partir de cette information, le calculateur déduit l'orientation $\beta$ à conférer aux moyens propulseurs 2 par rapport à l'axe X" de l'engin (axe apparent dudit engin au point d'articulation T). Or, du fait de la déformation de l'engin, l'axe apparent X' (de l'engin à l'endroit M de la mesure par le moyen de mesure 3A de la centrale inertielle 3) et l'axe apparent X" (dudit engin au niveau du point d'articulation T) ne sont pas parallèles entre eux, ni avec la fibre neutre 4 de l'engin.

Il s'ensuit l'apparition :

- d'une déformée angulaire $\delta\theta_M$ de l'engin 1, au point M de la mesure, par rapport à la fibre neutre 4 dudit engin,
- d'une déformée linéaire $\delta y_M$ de l'engin 1, au point M de la mesure, par rapport à la fibre neutre 4 dudit engin,
- d'une déformée angulaire $\delta\theta_T$ de l'engin 1, au point T d'articulation de la poussée, par rapport à la fibre neutre 4 dudit engin, et
- d'une déformée linéaire $\delta y_T$ de l'engin 1, au point d'articulation T, par rapport à la fibre neutre 4 dudit engin.

Chaque mode de déformation présente une pulsation $\omega$ et un coefficient d'amortissement $\xi$. Dès lors, l'influence de la déformation de la structure de l'engin, pour le N$^{ième}$ mode de déformation, peut s'écrire sous la forme du système d'équations suivant :

$$\delta y_M(t) = \delta y_{M,0}.q(t) \qquad \text{(Equation 2)}$$

$$\delta\theta_M(t) = \delta\theta_{M,0}.q(t) \qquad \text{(Equation 3)}$$

$$\delta y_T(t) = \delta y_{T,0}.q(t) \qquad \text{(Equation 4)}$$

$$\delta\theta_T(t) = \delta\theta_{T,0}.q(t) \qquad \text{(Equation 5)}$$

Où q est la solution de l'équation suivante :

$$\ddot{q}(t) + 2\xi\omega\dot{q}(t) + \omega^2 q(t) = \mu\delta y_{T,0}\beta \qquad \text{(Equation 6)}$$

Dont la solution fournit la nouvelle loi de commande :

$$\beta = \lambda_\theta\theta + \lambda_{\dot{\theta}}\dot{\theta} + \lambda_{\int\theta}\int\theta + \delta\theta_{M,0}\left(\lambda_\theta q + \lambda_{\dot{\theta}}\dot{q} + \lambda_{\int\theta}\int q\right) \qquad \text{(Equation 7)}$$

Comparée à la loi de commande classique définie à l'équation 1, la loi de commande ci-dessus comporte une composante supplémentaire $\delta\theta_{M,0}(\lambda_\theta q + \lambda_{\dot{\theta}}\dot{q} + \lambda_{\int\theta}\int q)$ qui traduit la perturbation de la boucle fermée d'asservissement par la déformation élastique de l'engin 1.

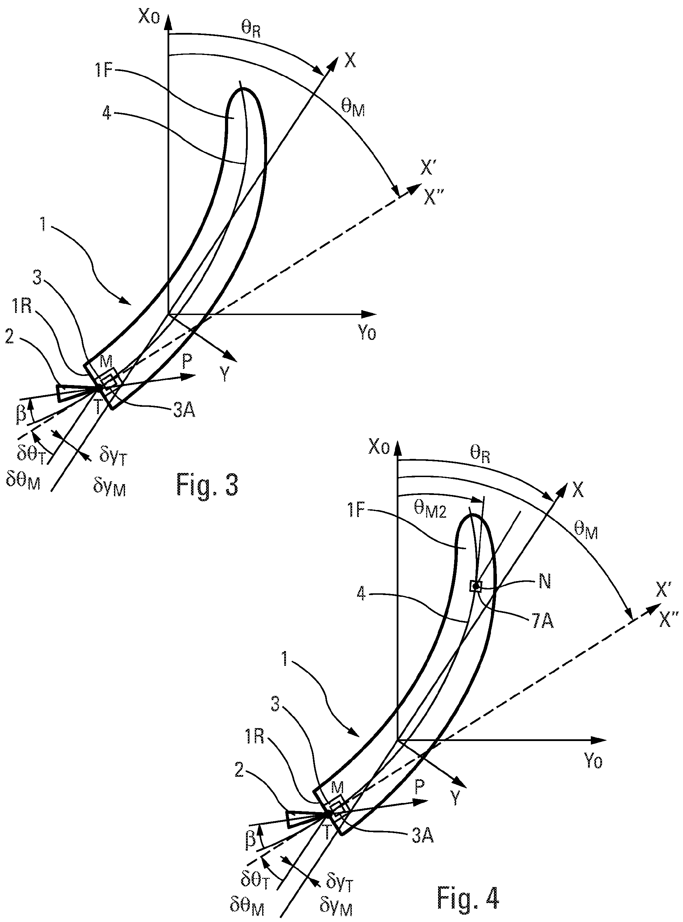

Afin de stabiliser chaque mode de déformation élastique, le moyen de mesure 3A est, conformément à l'invention, positionné au voisinage du point T autour duquel sont articulés les moyens propulseurs 2. Cette situation est représentée sur la figure 3.

On notera que le développement présenté ici est un modèle aux écarts, comportant des abus de notation classiques ($\theta$ est confondu avec $\Delta\theta$, $\theta_M$ avec $\Delta\theta_M$, $\Delta\beta$ avec $\beta$).

Dès lors, le comportement d'attitude de l'engin 1 est alors régi au premier ordre par les quatre équations suivantes :

$$\ddot{\theta} = K_\theta\theta + K_\beta\beta \qquad \text{(Equation 8)}$$

$$\theta_M = \theta + h'q \qquad \text{(Equation 9)}$$

$$\ddot{q} + 2\xi\omega\dot{q} + \omega^2 q = -P\omega^2 h\beta \qquad \text{(Equation 10)}$$

$$\beta = \lambda_\theta \theta_M + \lambda_{\dot{\theta}} \dot{\theta}_M \qquad \text{(Equation 11)}$$

Ceci avec :

- $\theta$ l'attitude de l'engin 1,
- $\beta$ l'orientation de la poussée P,
- $\theta_M$ l'attitude effectivement mesurée par le moyen de mesure 3A de la centrale inertielle 3,
- h' la déformée angulaire modale au point de mesure M,
- h la déformée linéaire modale au point d'articulation T,
- q le mode de déformation (en coordonnées généralisées),
- $K_\theta$ la raideur en attitude de l'engin, en boucle ouverte,
- $K_\beta$ l'efficacité de braquage des moyens propulseurs 2 en terme d'accélération angulaire,
- $\xi$ l'amortissement du mode de déformation,
- $\omega$ la pulsation du mode de déformation,
- P la poussée,
- $\lambda_\theta$ le gain d'attitude du système de pilotage, et
- $\lambda_{\dot{\theta}}$ le gain de vitesse d'attitude du système de pilotage.

La dynamique imposée par la boucle fermée d'asservissement conduit alors au réglage suivant du système de pilotage :

$$\lambda_\theta = -\frac{K_\theta + \omega_{BF}^2}{K_\beta} \qquad \text{(Equation 12)}$$

$$\lambda_{\dot{\theta}} = -\frac{2\xi_{BF}\omega_{BF}}{K_\beta} \qquad \text{(Equation 13)}$$

Ceci avec :

- $\omega_{BF}$ la pulsation du mode rigide en boucle fermée, et
- $\xi_{BF}$ l'amortissement du mode rigide en boucle fermée.

Sans que cela influe sur la portée de l'invention, on suppose que l'engin ne présente pas de raideur (i.e. $K_\theta$ = O) et que le mode n'est pas amorti (i.e. $\xi$ = O). On notera qu'un calcul analogue au calcul ci-après peut être obtenu sans ces hypothèses, dans la mesure où la raideur $K_\theta$ ne modifie que la valeur des gains de pilotage en vue d'atteindre la dynamique ($\omega_{BF}$ ; $\xi_{BF}$) que l'on impose à la boucle fermée. Par ailleurs, il va de soi qu'un amortissement non-nul des modes (donc positif puisque le système mécanique est dissipatif) présente un effet bénéfique quant à la stabilité de l'engin.

Avec les hypothèses ci-dessus, et en notant s la variable de Laplace, le dénominateur de la fonction de transfert en boucle fermée peut s'écrire sous la forme du polynôme suivant :

$$s^4 + 2\xi_{BF}\omega_{BF}\left(1 + \upsilon\omega^2\right)s^3 + \left(\omega^2 + \omega_{BF}^2 + \upsilon\omega^2\omega_{BF}^2\right)s^2 + 2\xi_{BF}\omega_{BF}\omega^2 s + \omega^2\omega_{BF}^2$$

(Equation 14)

Ceci avec le paramètre $\upsilon$ suivant :

$$\upsilon = -\frac{Phh'}{K_\beta} \qquad \text{(Equation 15)}$$

Le système d'équations 8 à 11 (et donc le mode de déformation correspondant) est stable si et seulement si les racines du polynôme de l'équation 14 sont à partie réelle négative.

Pour évaluer le signe de ces racines, il est possible d'appliquer le critère de Routh Hurwitz, ce qui permet de déduire que les racines du polynôme de l'équation 14 sont à parties réelles négatives si et seulement si les cinq coefficients suivants sont positifs :

$$1 \qquad \text{(Equation 16)}$$

$$2\xi_{BF}\omega_{BF}\left(1+\upsilon\omega^2\right) \qquad \text{(Equation 17)}$$

$$\frac{\upsilon\omega^4 + \omega_{BF}{}^2 + 2\upsilon\omega^2\omega_{BF}{}^2 + \upsilon^2\omega^4\omega_{BF}{}^2}{1+\upsilon\omega^2} \qquad \text{(Equation 18)}$$

$$\frac{2\upsilon\xi_{BF}\omega_{BF}\omega^6}{\upsilon\omega^4 + \omega_{BF}{}^2 + 2\upsilon\omega^2\omega_{BF}{}^2 + \upsilon^2\omega^4\omega_{BF}{}^2} \qquad \text{(Equation 19)}$$

$$\omega_{BF}{}^2\omega^2 \qquad \text{(Equation 20)}$$

Parmi les termes des coefficients ci-dessus, $\upsilon$ est le seul paramètre dont le signe peut être négatif. Ainsi, d'après le critère de Routh Hurwitz, le système est stable si $\upsilon$ est positif, ce qui revient à dire que le système est stable si le produit h.h' est négatif.

On en déduit que si la déformée angulaire h' au point de mesure M et la déformée linéaire h au point d'articulation T sont de signes opposés, alors, quel que soit le réglage en boucle fermée ($\omega_{BF}$ ; $\xi_{BF}$) du système de pilotage, le mode de déformation considéré est stable.

Cette situation est illustrée sur la figure 5. Sur le schéma A de la figure 5, la courbe 5 représente la fibre neutre de l'engin 1 par rapport à l'axe longitudinal X, lorsque ledit engin est déformé élastiquement uniquement suivant le mode d'ordre 1.

Les points T, U, V et W sont représentés à titre d'exemples de positions envisageables pour le point de mesure M. Il apparait alors que :

- pour le point d'articulation T, les déformées angulaire h' et linéaire h sont bien de signes opposés (h' positif, h négatif),
- pour le point U, les déformées angulaire h' et linéaire h ne sont pas de signes opposés (h' et h positifs),
- pour le point V, les déformées angulaire h' et linéaire h sont bien de signes opposés (h' négatif, h positif), et
- pour le point W, les déformées angulaire h' et linéaire h ne sont pas de signes opposés (h' et h négatifs).

La stabilité ne pourrait donc être assurée que si la mesure de l'attitude est effectuée soit au point T, soit au point V.

Sur le schéma B de cette même figure 5, la courbe 6 représente la fibre neutre de l'engin 1 par rapport à l'axe X, lorsque celui-ci est déformé élastiquement uniquement suivant un mode d'ordre supérieur à l'ordre 1. Dans ce cas, on observe que :

- pour le point T, les déformées angulaire h' et linéaire h sont toujours de signes opposés (h' positif, h négatif), et
- pour le point V, les déformées angulaire h' et linéaire h ne sont plus de signes opposés (h' négatif, h positif).

Seul le point T permet ainsi d'assurer une stabilité pour ces deux ordres de mode. On notera qu'un raisonnement analogue pour d'autres ordres conduirait au même résultat. Ainsi, puisque la déformation élastique que subit la structure de l'engin 1 est une combinaison de plusieurs modes tels que ceux des schémas A et B de la figure 5, il s'ensuit que le point T est le meilleur endroit pour effectuer la mesure d'attitude $\theta_M$ de l'engin 1, afin que la stabilité soit assurée pour tous les ordres de mode de déformation.

On comprendra qu'il n'est toutefois pas nécessaire que le point M soit parfaitement confondu avec le point T pour que l'invention autorise la stabilisation souhaitée, étant entendu que le point M peut être situé au moins approximativement au voisinage de l'extrémité arrière 1R de l'engin 1 pour que tous les ordres de mode soient stabilisés.

On comprendra également que, grâce à une stabilisation de tous les modes par le simple repositionnement du moyen de mesure 3A de l'attitude $\theta_M$ de l'engin 1, cette stabilisation s'opère de façon tout à fait naturelle, c'est-à-dire sans nécessiter l'adjonction de moyens additionnels de filtrage de l'orientation $\beta$ devant tenir compte des défauts de déformation résiduels.

Comme montré sur la figure 4, l'engin 1 comporte, en plus du premier moyen de mesure 3A de la centrale inertielle 3, un second moyen de mesure 7A de l'attitude dudit engin. Ce second moyen de mesure 7A, disposé en un point N situé dans la partie avant 1F de l'engin (à l'opposé de l'extrémité arrière 1R dudit engin), permet, tout comme le premier moyen de mesure 3A, de mesurer l'attitude $\theta_{M2}$ dudit engin 1 au point N, puis d'en déduire le braquage $\beta$ des moyens propulseurs 2 pour que ledit engin 1 suive la trajectoire (non représentée) stable souhaitée.

Selon cette forme de réalisation de l'invention, les moyens de mesure 3A et 7A peuvent fonctionner de façon alternative en fonction des conditions de vol envisagées. En effet, l'effet produit par les modes de déformation n'est généralement significatif que dans des conditions de vol atmosphérique. Le moyen de mesure 3A de la centrale inertielle 3 n'a donc d'utilité, à l'extrémité arrière 1R de l'engin, que dans des conditions de vol atmosphérique, dont la durée est généralement courte (deux à trois minutes). Pour le reste, en particulier pour le vol spatial et/ou le vol de navigation, le second moyen de mesure 7A est préférentiellement utilisé.

A cet égard, le second moyen de mesure 7A peut être un capteur de haute précision, ce qui permet de mesurer l'attitude de l'engin avec une précision élevée et ainsi de répondre au besoin de précision de la navigation. Le moyen de mesure 3A de la première centrale inertielle 3, quant à lui, peut être un capteur de précision inférieure à celle du second moyen de mesure 7A.

L'invention a été décrite ci-dessus en se fondant notamment sur l'hypothèse qu'il n'y a pas de retard entre le moment où la mesure de l'attitude $\theta_M$ est effectuée et le moment où le braquage $\beta$ commandé par le système de pilotage (par l'intermédiaire éventuellement du pilote) est appliqué. On notera cependant qu'un retard important pourrait conduire à un changement de signe de h et h' entre ces deux moments. Du point de vue du pilotage, cette situation serait équivalente à h et h' de même signe, ce qui ne permettrait plus d'assurer une stabilité naturelle. Toutefois, on comprendra que les principaux modes de déformation susceptibles d'être dans la bande passante de pilotage sont des modes basse fréquence et sont donc peu sensibles à l'ordre de grandeur du retard potentiel entre ces deux moments dans un système de pilotage classique.

## Revendications

**1.** Procédé de pilotage d'un engin (1) par des moyens propulseurs (2) orientables par rapport à l'extrémité arrière (1 R) de l'engin, procédé selon lequel, suivant une boucle d'asservissement :

- on mesure l'attitude ($\theta_M$) de l'engin (1), et
- on ajuste l'orientation ($\beta$) desdits moyens propulseurs (2) en fonction de ladite mesure d'attitude ($\theta_M$), de manière à stabiliser ledit engin (1) sur sa trajectoire de vol,
l'attitude ($\theta_M$) dudit engin (1) est mesurée au voisinage de ladite extrémité arrière (1 R) et en ce que, lors de l'ajustement de l'orientation ($\beta$) des moyens propulseurs (2), il est tenu compte des déformées angulaires ($\delta\theta_M$, $\delta\theta_T$) et linéaires ($\delta y_M$, $\delta y_T$) à l'extrémité arrière (1R) dudit engin (1) et à l'endroit (M) de la mesure d'attitude ($\theta_M$).

**2.** Procédé selon la revendication 1,
**caractérisé en ce que** l'endroit (M) de la mesure d'attitude ($\theta_M$) de l'engin (1) est déterminé de manière que, quelle que soit la déformation dudit engin, la déformée angulaire ($\delta\theta_M$) à l'endroit (M) de ladite mesure d'attitude et la déformée linéaire ($\delta y_T$) à l'extrémité arrière (1 R) dudit engin sont de signes opposés.

**3.** Procédé selon la revendication 1,
**caractérisé en ce que**, lorsque, pour une déformation donnée de l'engin (1), la déformée angulaire ($\delta\theta_M$) à l'endroit (M) de la mesure d'attitude ($\theta_m$) et la déformée linéaire ($\delta y_T$) à l'extrémité arrière (1 R) dudit engin sont de même signe, on ajuste l'orientation ($\beta$) des moyens propulseurs (2) en tenant compte dudit signe.

**4.** Engin (1), comprenant :

- des moyens propulseurs (2) orientables par rapport à l'extrémité arrière (1 R) dudit engin,
- des moyens de mesure (3A) de l'attitude ($\theta_M$) dudit engin, et
- des moyens d'ajustement de l'orientation ($\beta$) desdits moyens propulseurs (2) en fonction de ladite mesure d'attitude ($\theta_m$), de manière à stabiliser ledit engin sur sa trajectoire de vol,

les moyens de mesure (3A) sont situés au voisinage de l'extrémité arrière (1 R) dudit engin et

**caractérisé en ce que** les moyens d'ajustement de l'orientation ($\beta$) des moyens propulseurs (2) sont configurés pour tenir compte des déformées angulaires ($\delta\theta_M$, $\delta\theta_T$) et linéaires ($\delta y_M$, $\delta y_T$) à l'extrémité arrière (1 R) dudit engin (1) et à l'endroit (M) de la mesure d'attitude ($\theta_M$).

5. Engin selon la revendication 4,
   **caractérisé en ce qu'**il comporte, en plus des premiers moyens de mesure (3A) de l'attitude ($\theta_M$) dudit engin (1), situés au voisinage de l'extrémité arrière (1 R) dudit engin (1), des seconds moyens de mesure (7A) de l'attitude ($\theta_M$) dudit engin (1), situés à l'opposé de l'extrémité arrière (1 R) dudit engin (1).

6. Engin selon la revendication 5,
   **caractérisé en ce que** les premiers (3A) et seconds (7A) moyens de mesure sont configurés pour fonctionner de façon alternative en fonction des conditions de vol dudit engin (1) envisagées.

**Patentansprüche**

1. Verfahren zur Steuerung eines Flugkörpers (1) durch Triebwerkmittel (2), die gegenüber dem hintere Ende (1R) des Flugkörpers orientierbar sind, wobei bei dem Verfahren nach einer Regelschleife:

   - die Höhe ($\theta_M$) des Flugkörpers (1) gemessen wird, und
   - die Ausrichtung ($\beta$) der Triebwerkmittel (2) in Abhängigkeit von der Messung der Höhe ($\theta_M$) derart angepasst wird, um den Flugkörper (1) auf seiner Flugbahn zu stabilisieren,

   die Höhe ($\theta_M$) des Flugkörpers (1) in der Nähe des hinteren Endes (1R) gemessen wird und beim Anpassen der Ausrichtung ($\beta$) der Triebwerkmittel (2) die Winkelverzerrungen ($\delta\theta_M$, $\delta\theta$) und die Linearverzerrungen ($\delta y_M$, $\delta\gamma_\tau$) an dem hintere Ende (1R) des Flugkörpers (1) und an der Stelle (M) der Messung der Höhe ($\theta_M$) berücksichtigt werden.

2. Verfahren nach Anspruch 1,
   **dadurch gekennzeichnet, dass** die Stelle (M) der Messung der Höhe ($\theta_M$) des Flugkörpers (1) derart bestimmt wird, dass unabhängig von der Verzerrung des Flugkörpers, die Winkelverzerrung ($\delta\theta_M$) an der Stelle (M) der Messung der Höhe und die Linearverzerrung ($\delta y_\tau$) an dem hintere Ende (1R) des Flugkörpers entgegengesetzte Vorzeichen haben.

3. Verfahren nach Anspruch 1,
   **dadurch gekennzeichnet, dass**, wenn für eine gegebene Verzerrung des Flugkörpers (1) die Winkelverzerrung ($\delta\theta_M$) an der Stelle (M) der Messung der Höhe ($\theta_M$) und die Linearverzerrung ($\delta\gamma_\tau$) an dem hinteren Ende (1R) des Flugkörpers das gleiche Vorzeichen haben, die Ausrichtung ($\beta$) der Triebwerkmittel (2) unter Berücksichtigung des Vorzeichens angepasst wird.

4. Flugkörper (1), umfassend:

   - Triebwerkmittel (2), die gegenüber dem hintere Ende (1R) des Flugkörpers orientierbar sind,
   - Mittel zum Messen (3A) der Höhe ($\theta_M$) des Flugkörpers, und
   - Mittel zum Anpassen der Ausrichtung ($\beta$) der Triebwerkmittel (2) in Abhängigkeit von der Messung der Höhe ($\theta_M$), um den Flugkörper auf seiner Flugbahn zu stabilisieren,

   wobei die Mittel zum Messen (3A) in der Nähe des hinteren Endes (1R) des Flugkörpers angeordnet sind und **dadurch gekennzeichnet, dass** die Mittel zum Anpassen der Ausrichtung ($\beta$) der Triebwerkmittel (2) konfiguriert sind, um die Winkelverzerrungen ($\delta\theta_M$, $\delta\theta_\tau$) und die Linearverzerrungen ($\delta y_M$, $\delta\gamma_\tau$) an dem hinteren Ende (1R) des Flugkörpers (1) und an der Stelle (M) der Messung der Höhe ($\theta_M$) zu berücksichtigen.

5. Flugkörper nach Anspruch 4,

**dadurch gekennzeichnet, dass** er zusätzlich zu den Mitteln zum Messen (3A) der Höhe ($\theta_M$) des Flugkörpers (1), die in der Nähe des hinteren Endes (1R) des Flugkörpers (1) angeordnet sind, zweite Mittel zum Messen (7A) der Höhe ($\theta_M$) des Flugkörpers (1) aufweist, die gegenüber von dem hinteren Ende (1R) des Flugkörpers (1) angeordnet sind.

6. Flugkörper nach dem Anspruch 5,
   **dadurch gekennzeichnet, dass** die ersten (3A) und zweiten (7A) Mittel zum Messen konfiguriert sind, um alternativ in Abhängigkeit von den beabsichtigten Flugbedingungen des Flugkörpers (1) zu funktionieren.

**Claims**

1. Method for piloting a craft (1) by propulsion means (2) that can be oriented relative to the rear end (1 R) of said craft, according to which method, in accordance with a servo loop:

   - the attitude ($\theta_M$) of said craft (1) is measured, and
   - the orientation ($\beta$) of said propulsion means (2) is adjusted as a function of said attitude measurement ($\theta M$), in such a way as to stabilise said craft (1) on its flight path,

   the attitude ($\theta M$) of said craft (1) is measured in the vicinity of said rear end (1 R) and when adjusting the orientation ($\beta$) of said propulsion means (2), angular ($\delta\theta M$, $\delta\theta T$) and linear ($\delta y M$, $\delta y T$) deformations at the rear end (1 R) of said craft (1) and at the location (M) of the attitude measurement ($\theta M$) are taken into account.

2. Method according to claim 1,
   **characterised in that** the location (M) of the attitude measurement ($\theta M$) of said craft (1) is determined in such a way that, regardless of the deformation of said craft, the angular deformation ($\delta\theta M$) at the location (M) of said attitude measurement and the linear deformation ($\delta y T$) at the rear end (1 R) of said craft are opposite signs.

3. Method according to claim 1,
   **characterised in that** when, for a given deformation of said craft (1), the angular deformation ($\delta\theta M$) at the location (M) of the attitude measurement and the linear deformation ($\delta y T$) at the rear end (1 R) of said craft are the same sign, the orientation ($\beta$) of the propulsion means (2) is adjusted taking into account said sign.

4. Craft (1), comprising:

   - propulsion means (2) of said craft (1), which means can be oriented relative to the rear end (1 R) of said craft,
   - means (3A) for measuring the attitude ($\theta M$) of said craft, and
   - means for adjusting the orientation ($\beta$) of said propulsion means (2) as a function of said attitude measurement ($\theta M$), in such a way as to stabilise said craft on its flight path,

   the measurement means (3A) are located in the vicinity of the rear end (1 R) of said craft and **characterised in that** the orientation ($\beta$) adjusting means of the propulsion means (2) are configured to take into account the angular ($\delta\theta M$, $\delta\theta T$) and linear ($\delta y M$, $\delta y T$) deformations at the rear end (1 R) of said craft (1) and at the location (M) of the attitude measurement ($\theta M$).

5. Craft according to claim 4,
   **characterised in that** it comprises, in addition to the first measurement means (3A) of the attitude ($\theta M$) of said craft (1), arranged at the vicinity of the rear end (1) of said craft (1), second means (7A) for measuring the attitude ($\theta M$) of said craft (1), arranged at the opposite of the rear end (1 R) of said craft (1).

6. Craft according to claim 5,
   **characterised in that** the first (3A) and the second (7B) measurement means are configured to operate in an alternative manner as a function of the envisaged flight conditions of said craft (1).

Fig. 1

Fig. 2

Fig. 3

Fig. 4

(A)

(B)

Fig. 5

**EP 2 668 100 B1**

## RÉFÉRENCES CITÉES DANS LA DESCRIPTION

**Documents brevets cités dans la description**

- EP 0352161 A